# EUROPÄISCHE PATENTSCHRIFT

(11) **EP 1 182 430 B1**
(45) Veröffentlichungstag und Bekanntmachung des Hinweises auf die Patenterteilung: **27.02.2008**
(21) Anmeldenummer: 01116501.6
(22) Anmeldetag: 07.07.2001
(51) Int. Cl.: G01D 13/22, G01D 11/28

(54) **Anzeigevorrichtung mit einem Zeiger**
Pointer type indicator
Indicateur comportant une aiguille

(30) Priorität: 24.08.2000 DE 10041474
(43) Veröffentlichungstag der Anmeldung: 27.02.2002
(73) Patentinhaber: Siemens VDO Automotive AG, 93055 Regensburg (DE)
(72) Erfinder: Adams, Jürgen, Dipl.Ing. (FH), 78052 Tannheim (DE); Wolf, Jürgen, Dipl. Ing. (FH), 78048 Villingen (DE)

(56) Entgegenhaltungen:
- EP-A- 0 659 866
- EP-A- 0 721 176
- FR-A- 2 668 590
- US-A- 4 581 608
- US-A- 4 919 521
- US-A- 5 463 492

## Beschreibung

Die Erfindung betrifft eine Anzeigevorrichtung mit einem Zeiger nach dem Oberbegriff des ersten Anspruchs. Bei dieser Anzeigevorrichtung besteht der Zeiger aus einer drehbaren Zeigerachse und einer an der Zeigerachse angeordneten Zeigerfahne, wobei die Zeigerfahne infolge einer Drehung der Zeigerachse über einem Zifferblatt ausschwenkt.

Derartige Anzeigevorrichtungen sind durch vielfältige Benutzung bekannt. Sie finden sich beispielsweise in Anzeigeinstrumenten in Fahrzeugen. Bei machen dieser Fahrzeug spezifischen Ausführungen ist es wünschenswert, dass die Zeigerfahne zusätzlich zu ihrer analogen Anzeigefunktion infolge der Drehung der Zeigerachse auch die Funktion eines Melders übernimmt. Für diesen Zweck hat man die Zeigerfahne beispielsweise als Lichtleiter ausgebildet und im Bedarfsfall mit Licht aus verschiedenfarbigen Lichtquellen beleuchtet. Nachteilig ist bei derartigen Anzeigevorrichtungen, dass sie bei hellem Umgebungslicht infolge zu geringen Kontrastes nur eine schwache Signalwirkung erzeugen. Auch ist die Einspeisung von Licht aus verschiedenfarbigen Lichtquellen aufwendig. Darüber hinaus sind bereits in der FR-A-2668590 Ausgestaltungen von gattungsmäßigen Anzeigevorrichtungen vorgeschlagen worden, bei denen
a) die Zeigerfahne um ihre Zeigerachse drehbar gelagert ist,
b) die Zeigerfahne in ihrer Längsachse mindestens zwei voneinander unterscheidbare Begrenzungsflächen aufweist und
c) diese Begrenzungsflächen mit einem unterschiedlichen Farbauftrag versehen sind und zur Signalisierung einer bestimmten Meldung eine dieser Begrenzungsflächen dem Betrachter zugewandt wird, so dass der Betrachter einen, einer bestimmten Meldung zugeordneten Farbauftrag zu sehen bekommt.

Aus der US-A-5,463,492 sind Mikrokapseln bekannt, in die Pigmente oder Mikrokörper eingelagert sind, die sich durch ein magnetisches oder elektrisches Feld beeinflussen lassen.

Es ist nun Aufgabe der vorliegenden Erfindung, eine gattungmäßige Anzeigevorrichtung mit einem Zeiger derart weiterzuentwickeln, dass die Zeigerfahne ohne größeren mechanischen Aufwand als Melder nutzbar ist.

Gelöst wird die Aufgabe durch eine Anzeigevorrichtung mit einem Zeiger mit den Merkmalen des ersten oder zweiten Anspruchs.

Die erfindungsgemäße Anzeigevorrichtung ist entweder derart ausgestaltet, dass Elektroden zur Ausbildung eines elektrischen Feldes vorgesehen sind, wobei die die Mikrokapseln enthaltene Beschichtung zwischen einer ersten Elektrode und einer oder mehreren zweiten Elektroden angeordnet ist. Hierbei ist mindestens eine zweite Elektrode auf der vom Betrachter abgewandten Seite des Zifferblattes flächenhaft ausgebildet und ruft durch ihre Kontur beim Überstreichen der Zeigerfahne über dem Zifferblatt eine kontinuierlich verlaufende Segmentierung der Zeigerfahne hervor. Alternativ zu der Lösung mit der Ausbildung eines elektrischen Feldes ist eine Anordnung mit mindestens einem Elektromagneten vorgesehen, wobei mit der Hilfe des oder der Elektromagneten ein magnetisches Feld zur Beeinflussung der in den Mikrokapseln eingelagerten Pigmente oder Mikrokörper erzeugt wird. Wenn mehrere Elektromagneten bzw. Permanentmagneten verwendet werden, können diese unterschiedliche Abstände zur Zeigerachse aufweisen.

Durch die Beeinflussung der Pigmente oder Mikrokörper durch ein elektrisches oder magnetisches Feld ist die Zeigerfahne zusätzlich zu ihrer herkömmlichen Anzeigefunktion als Melder nutzbar. Zur Realisierung dieses Zusatznutzens bedarf es im Vergleich zu herkömmlichen Ausgestaltungen von gattungsgemäßen Anzeigevorrichtungen keiner zusätzlichen mechanischen, insbesondere keiner beweglichen Bauteile, was sich gerade bei der Verwendung einer gattungsgemäßen Anzeigevorrichtung in Fahrzeugen infolge verbesserter Vibrationsfestigkeit günstig auswirkt.

Die vorgeschlagene Lösung benutzt, wie in den abhängigen Ansprüchen dargelegt, als Beschichtung vorzugsweise einen transparenten, drucktechnisch auftragbaren Lack, in dem die Mikrokapseln frei beweglich emulgiert sind. Statt eines Lackes eignen sich aber auch andere Trägermaterialien für die Mikrokapseln, so z. B. transparente Folien aus Kunststoff, die auf der Zeigerfahne aufgeklebt werden können. In den Mikrokapseln sind vorzugsweise flächige, unterschiedlich eingefärbte Pigmente oder Mikrokörper eingelagert, die durch ein äußeres elektrisches oder magnetisches Feld in ihrer jeweiligen Ausrichtung zum Betrachter beeinflusst werden können. Dabei kann die erste Elektrode aus einer elektrisch leitfähigen und weitgehend transparent ausgebildeten Lackschicht bestehen oder zum Beispiel auf der Basis von Indium Thin Oxid (ITO) Schichten als transparente Leitschicht auf der Oberfläche der Zeigerfahne aufgesputtert werden. Auch eignen sich zur Ausgestaltung der ersten Elektrode hauchdünne, vorzugsweise aufklebbare Metallgeflechte, die einen sehr hohen Transmissionsgrad von zum Beispiel 60 % oder mehr erreichen, oder auch folienartige, aus einem Kunststoff bestehende Trägermaterialien. Sofern der Körper der Zeigerfahne aus einem Gießharz gefertigt wird, können in ihrer Konsistenz feste Trägermaterialien - wie beispielsweise auch ein Metallgeflecht - in die Gießform zur Herstellung des Körpers der Zeigerfahne eingelegt werden, bevor die Gießform ausgegossen wird, so dass die erste Elektrode nicht oberflächlich am Körper der Zeigerfahne angebracht, sondern in den Körper eingebracht ist.

Überdies kann der Beschichtung auf der Zeigerfahne eine aus einem Lack oder einer Klebefolie bestehende Farbschicht unterlagert sein, deren Sicht für einen auf die Zeigerfahne blickenden Betrachter je nach Ausrichtung und Intensität eines auf die Beschichtung einwirkenden elektrischen oder magnetischen Feldes durch die Pigmente oder Mikrokörper entweder freigegeben oder versperrt wird.

Anhand von sechs Figuren soll die Erfindung nun noch näher erläutert werden. Dabei zeigen
- **Figur 1**: schematisch den prinzipiellen Aufbau einer gattungsgemäßen Anzeigevorrichtung mit einer Anordnung von Elektroden zur Ausbildung eines elektrischen Feldes zur Beeinflussung der in den Mikrokapseln eingelagerten Pigmente oder Mikrokörper in der Beschichtung der Zeigerfahne,
- **Figur 2**: schematisch den prinzipiellen Aufbau einer gattungsgemäßen Anzeigevorrichtung mit einer Anordnung eines Elektromagneten zur Ausbildung eines magnetischen Feldes zur Beeinflussung der in den Mikrokapseln eingelagerten Pigmente oder Mikrokörper in der Beschichtung der Zeigerfahne,
- **Figur 3**: eine Detaildarstellung von der beschichteten Zeigerfahne mit drei Ausführungsbeispielen für die Beschichtung der Zeigerfahne in den zugehörigen Figuren 3A bis 3C,
- **Figur 4**: eine exemplarische Darstellung einer Anzeigevorrichtung mit einer Anordnung von Elektroden zur Segmentierung der Zeigerfahne,
- **Figur 5**: eine exemplarische Darstellung einer Anzeigevorrichtung mit einer Anordnung von Elektromagneten zur Segmentierung der Zeigerfahne und
- **Figur 6**: eine Darstellung diverser Zeigerstellungen mit einer segmentierten Zeigerfahne.

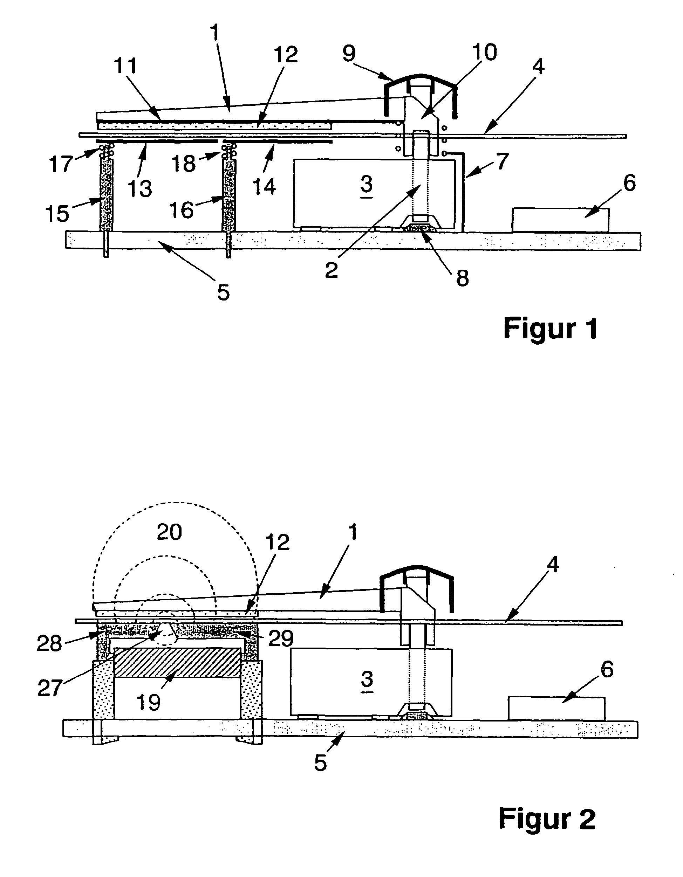

Gemäß der **Figur 1** besitzt eine gattungsgemäße Anzeigevorrichtung einen Zeiger, der aus einer Zeigerfahne 1 und einer Zeigerachse 2 besteht. Die Zeigerfahne 1 ist mit der Zeigerachse 2 derart verbunden, daß eine Drehung der Zeigerachse 2 die Zeigerfahne 1 über einem Zifferblatt 4 auslenkt, wodurch die Zeigerfahne 1 ihre herkömmliche Anzeigefunktion erfüllt. Die Zeigerachse 2 kann zum Beispiel von einem Schrittmotor 3 oder einem anderen geeigneten Antrieb angetrieben werden. Der Schrittmotor 3 und dessen elektronische Ansteuerung ist in der Regel auf einer Leiterplatte 5 montiert. Für kraftfahrtechnische Anwendungen ist die Zeigerachse 2 zumeist Licht leitend ausgebildet und eine Leuchtdiode 8 oder ein anderes Leuchtmittel ist derart auf der Leiterplatte 5 plaziert, daß von diesem Leuchtmittel ausgesandtes Licht in die Zeigerachse 2 eingekoppelt wird. Durch einen an der Zeigerachse 2 angebrachten Prismenkopf 10 wird dann dieses Licht in die Zeigerfahne 1 geleitet, um die Zeigerfahne 1 zu beleuchten. Eine Zeigerkappe 9 deckt frontseitig die Zeigerachse 2 ab. Die Zeigerfahne 1 weist vorzugsweise an ihrer dem Zifferblatt 4 zugewandten Seite in Form einer elektrisch leitfähigen Schicht eine erste Elektrode 11 auf, die über ein Kontaktelement 7 mit einer elektronischen Schaltungsanordnung 6 auf der Leiterplatte 5 verbunden ist. Auf dieser ersten Elektrode 11 ist in Richtung Zifferblatt 4 eine Beschichtung 12 aufgetragen, die elektrisch beeinflußbare, in Mikrokapseln 22 eingelagerte Pigmente 24 oder Mikrokörper 26 enthält. Vorzugsweise unterhalb des Zifferblattes 4 sind beispielsweise wiederum in Form elektrisch leitfähiger Schichten eine oder mehrere zweite Elektroden 13 bzw. 14 angeordnet, so daß sich zwischen der ersten Elektrode 11 und der oder den zweiten Elektrode(n) 13 bzw. 14 ein elektrisches Feld ausbilden kann, wenn an den Elektroden 11 und 13 bzw. 14 eine elektrische Spannung angelegt wird. Die zweiten Elektroden 13 bzw. 14 können über Kontaktstifte 15 bzw. 16 und Kontaktfedern 17 bzw. 18 mit der bereits zuvor erwähnten elektronischen Schaltungsanordnung 6 auf der Leiterplatte 5 verbunden sein. Die Elektroden 11 und 13 bzw. 14 sind demnach derart angeordnet, daß ein sich zwischen ihnen ausbildendes elektrisches Feld auf die elektrisch beeinflußbaren, in den Mikrokapseln 22 eingelagerten Pigmente 24 oder Mikrokörper 26 Einfluß nehmen kann. Damit ist es möglich, je nach Art der Ansteuerung der Elektroden 11 und 13 bzw. 14 einen bestimmten visuellen Eindruck der Zeigerfahne 1 "einzuschalten" oder "auszuschalten" bzw. kontinuierlich zu verändern. Der jeweilige optische Zustand der Zeigerfahne 1 setzt dann an einen Betrachter der Anzeigevorrichtung eine Meldung ab, nämlich diejenige, die dem jeweiligen optischen Zustand der Zeigerfahne 1 zugeordnet ist.

Die **Figur 2** zeigt schematisch den prinzipiellen Aufbau einer gattungsgemäßen Anzeigevorrichtung mit einer Anordnung von mindestens einem auf der Leiterplatte 5 montierten und von der Schaltungsanordnung 6 gesteuerten Elektromagneten 19 zur Ausbildung eines magnetischen Feldes zur Beeinflussung der Pigmente 24 oder Mikrokörper 25 in der Beschichtung 12 der Zeigerfahne 1, wobei der oder die Elektromagnet(en) 19 zwei durch einen Luftspalt 27 getrennte Polschuhe 28 und 29 besitzt bzw. besitzen. Die angedeuteten Feldlinien 20 zeigen eine mögliche Ausprägung des von dem hier dargestellten Elektromagneten 19 erzeugten magnetischen Feldes. Der weitere Aufbau dieser Anzeigevorrichtung entspricht im wesentlichen dem Aufbau der in der Figur 1 dargestellten Anzeigevorrichtung mit Ausnahme der Elektroden 11 und 13 bzw. 14 sowie ihren Kontaktstiften 15 bzw. 16, Kontaktfedern 17 bzw. 18 und dem Kontaktelement 7, die allesamt nur für die Beeinflussung der Beschichtung 12 durch ein elektrisches Feld benötigt werden. Auch wenn hier bevorzugt eine Anordnung mit steuerbaren Elektromagneten 19 gezeigt und besprochen wird, ist der erfindungsgemäße Gedanke auch mit einer Anordnung von Permanentmagneten realisierbar.

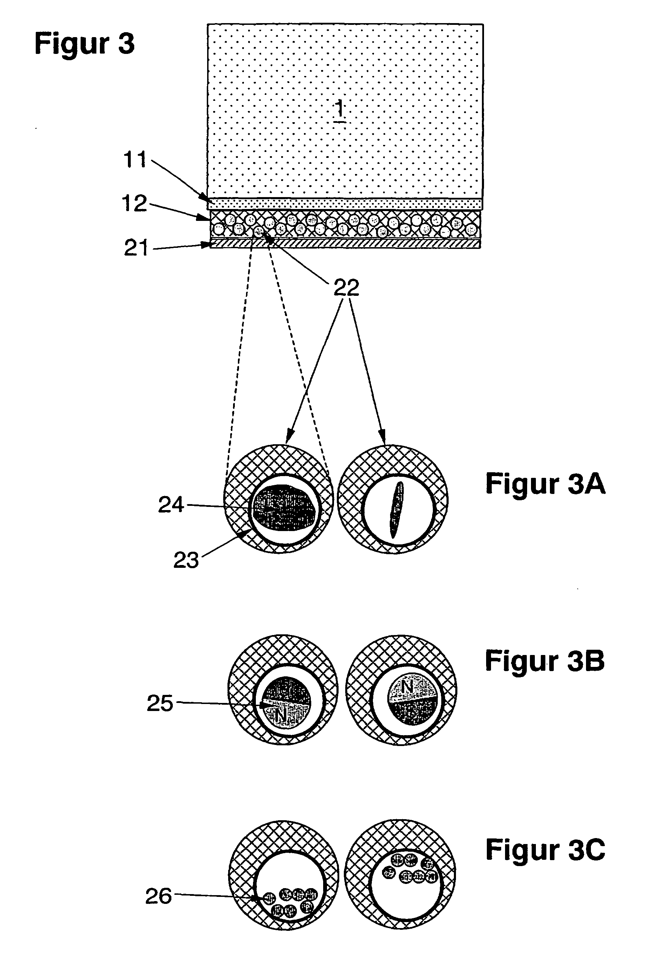

Die **Figur 3** enthält eine Detaildarstellung von der beschichteten Zeigerfahne 1. Der Körper der Zeigerfahne 1 ist dazu vergrößert im Querschnitt dargestellt. In dem hier gezeigten Beispiel besitzt der Körper der Zeigerfahne 1 einen rechteckigen Querschnitt. An der Unterseite des Körpers der Zeigerfahne 1, d.h. an der dem Zifferblatt 4 zugewandten Seite, ist zunächst eine erste Elektrode 11 angebracht, die in Form einer elektrisch leitfähigen Schicht, z.B. einer geeigneten Lackschicht aufgetragen sein kann und vorzugsweise weitgehend transparent ausgebildet ist, d.h. für Licht einen hohen Transmissionsgrad besitzt. Diese die Elektrode 11 bildende Schicht entfällt selbstverständlich, wenn eine Beeinflussung der Beschichtung 12 durch ein magnetisches Feld vorgesehen ist. Auf der die Elektrode 11 bildenden Schicht wird eine Mikrokapseln 22 enthaltende Beschichtung 12 aufgetragen. Auch bei dieser Beschichtung 12 kann es sich um einen Lack handeln, in welchem durch ein elektrisches oder ein magnetisches Feld beeinflußbare Mikrokapseln 22 emulgiert sind. Jedoch sind statt der Ausbildung der Beschichtung 12 als Lack auch folienartige, aus einem Kunststoff bestehende Trägermaterialien geeignet, die auf dem Körper der Zeigerfahne 1 aufklebbar sein können. Diese folienartigen Trägermaterialien sind ebenso wie der Lack vorzugsweise transparent, so daß im wesentlichen nur die Ausrichtung der im Trägermaterial bzw. Lack enthaltenen Mikrokapseln 22 den jeweiligen Farbeindruck prägen. Ungeachtet der Ausbildung der Beschichtung 12 sind in jedem Fall in ihr eine Vielzahl frei beweglicher Mikrokapseln 22 emulgiert, von denen in der Figur 3 eine einzelne beispielhaft herausgegriffen ist, um nachfolgend an ihr weitere Details darzustellen. So sind in den zur Figur 3 gehörenden Figuren 3A bis 3C beispielhaft Vergrößerungen dargestellt, die in den Mikrokapseln 22 flächige, unterschiedlich eingefärbte, in einer Kavität 23 eingelagerte Pigmente 24 oder Mikrokörper 25 bzw. 26 zeigen, wobei diese Pigmente 24 oder Mikrokörper 25 bzw. 26 ihrerseits durch ein auf die Beschichtung 12 einwirkendes magnetisches oder elektrisches Feld in ihrer jeweiligen Ausrichtung in den Mikrokapseln beeinflußbar sind. So zeigt die **Figur 3A** eine Mikrokapsel 22 mit einem eingelagerten Pigment 24, welches sich je nach der Richtung eines anliegenden magnetischen oder elektrischen Feldes mit Bezug auf einen auf den Körper der Zeigerfahne 1 blickenden Betrachter lateral oder vertikal ausrichtet. Gemäß der Darstellung in der **Figur 3B** sind in den Mikrokapseln 22 magnetisch gepolte Mikrokugeln 25 enthalten, deren beide Pole N und S unterschiedlich eingefärbt sind und die durch Anlegen eines magnetischen Feldes so ausgerichtet werden können, daß entweder der eine oder der andere Pol zum Betrachter hin sichtbar wird, wodurch für den Betrachter je nach zugewandtem Pol ein unterschiedlicher Farbeindruck für die Zeigerfahne 1 entsteht. In der **Figur 3C** sind in den Mikrokapseln 22 Mikrokörper 26 enthalten, die durch ein an der Beschichtung 12 angelegtes elektrisches Feld im oberen oder im unteren Bereich der in den Mikrokapseln 22 enthaltenen Kavität 23 konzentriert werden können und damit einem auf den Körper der Zeigerfahne 1 blickenden Betrachter einen unterschiedlichen optischen Eindruck vermitteln. Allen diesen beispielhaft und keineswegs abschließend erwähnten Ausgestaltungsformen der vorgeschlagenen Lösung ist gemeinsam, daß sie der Zeigerfahne 1 in Abhängigkeit von einer elektrischen oder magnetischen Beeinflussung der auf der Zeigerfahne 1 aufgebrachten Beschichtung 12 eine unterschiedliche optische Anmutung verleihen. Ergänzend kann der Beschichtung 12 noch eine aus einem Lack oder einer Klebefolie bestehende Farbschicht 21 unterlagert werden, deren Sicht für einen auf die Zeigerfahne 1 blickenden Betrachter je nach Ausrichtung und Intensität eines auf die Beschichtung 12 einwirkenden elektrischen oder magnetischen Feldes durch die Pigmente 24 oder Mikrokörper 25 bzw. 26 entweder freigegeben oder versperrt wird. Eine solche Farbschicht 21 kann entfallen, wenn bereits die Pigmente 24 oder Mikrokörper 25 bzw. 26 mehrfarbig ausgebildet sind und damit von der Zeigerfahne 1 ein unterschiedlicher visueller Eindruck vermittelbar ist.

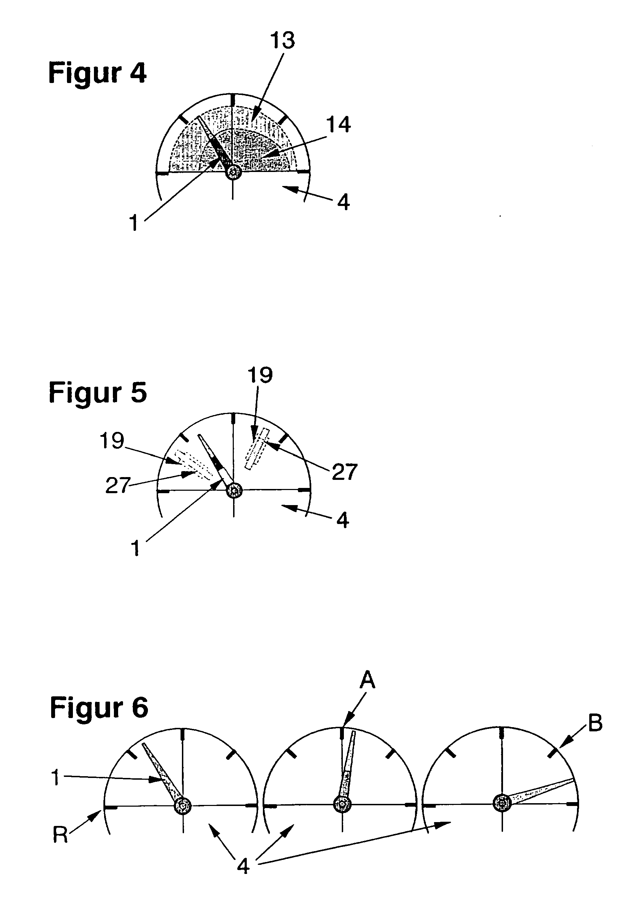

Die **Figur 4** zeigt beispielhaft die Frontseite einer gattungsgemäßen Anzeigevorrichtung, bei der eine auf der Zeigerfahne 1 aufgebrachte Beschichtung 12 durch ein elektrisches Feld beeinflußt wird. Vom Betrachter aus gesehen hinter dem Zifferblatt 4 sind beispielsweise zwei zweite Elektroden 13 und 14 angeordnet. Wenn die Zeigerfahne 1 das Zifferblatt 4 überstreicht, kann durch den Aufbau eines elektrischen Feldes zwischen den zweiten Elektroden 13 bzw. 14 und einer am Körper der Zeigerfahne 1 angebrachten ersten Elektrode 11 - wie in den Figuren 1 und 3 gezeigt - der visuelle Eindruck der Zeigerfahne 1 verändert werden, und zwar sogar in einzelnen Teilbereichen der Zeigerfahne 1, nämlich denjenigen Teilbereichen, die sich in Abhängigkeit vom Ausschlag der Zeigerfahne 1 gerade mit den zweiten Elektroden 13 bzw. 14 überdecken. Durch die Kontur der flächenhaft ausgebildeten mindestens einen zweiten Elektrode 13 bzw. 14 erfolgt demnach hinsichtlich der optischen Anmutung eine kontinuierlich verlaufende Segmentierung der Zeigerfahne 1, wobei jedes Segment für sich einzeln beeinflußbar ist.

In der **Figur 5** ist eine Anzeigevorrichtung mit einer Anordnung von zwei Elektromagneten 19 dargestellt, wobei die dargestellten Elektromagneten 19 an unterschiedlichen Stellen auf einer von dem Zifferblatt 4 verdeckten Leiterplatte 5 montiert sind. Wenn die Zeigerfahne 1 das Zifferblatt 4 und damit auch die Elektromagneten 19 überstreicht, können bei einer Überdeckung von der Zeigerfahne 1 mit einem Elektromagneten 19 magnetisch beeinflußbare Pigmente 24 oder Mikrokörper 25 in der Beschichtung 12 der Zeigerfahne 1 in ihrer Lage umgepolt werden, so daß sich durch eine veränderte Ausrichtung der magnetisch beeinflußbaren Pigmente 24 oder Mikrokörper 25 der von der Zeigerfahne 1 resultierende optische Eindruck ändert. Durch die Anordnung und Bauart der Elektromagneten 19 läßt sich auch in diesem Fall die Zeigerfahne 1 segmentieren. Die in der Beschichtung 12 der Zeigerfahne 1 enthaltenen magnetisch beeinflußbaren Pigmente 24 oder Mikrokörper 25 behalten nach einem Überschreiten oder Unterschreiten eines bestimmten Überdeckungsbereiches der Zeigerfahne 1 mit einem Elektromagneten 19 ihre jeweilige Ausrichtung bei, so daß die jeweilige Anordnung des oder der Elektromagneten 19 auf der Leiterplatte 5 einen Umschaltpunkt für die optische Anmutung der Zeigerfahne 1 definieren, wobei eine Umschaltung erfolgt, wenn zur Zeit der Überdeckung von Zeigerfahne 1 und Elektromagnet 19 letzterer durch die Schaltungsanordnung 6 zur Erzeugung eines Polaritätswechsels angesteuert wird. Überdies läßt sich mit der Lage des Luftspalts 27 zwischen den beiden Polschuhen 28 und 29 des Elektromagneten 19 die jeweilige Segmentbreite bei einer segmentierten Zeigerfahne 1 beeinflussen.

Die **Figur 6** enthält eine Darstellung diverser Zeigerstellungen mit einer segmentierten Zeigerfahne 1. In dem gezeigten Beispiel verändert zunächst das obere Segment der Zeigerfahne 1 beim Überschreiten der Position A seine Farbe. Wird die Zeigerfahne 1 über dem Zifferblatt 4 noch weiter im Uhrzeigersinn ausgelenkt, wechselt die Zeigerfahne 1 an der Position B in ihrer gesamten Länge ihr Erscheinungsbild. Beim Zurücklaufen der Zeigerfahne 1 in ihre Ruheposition R können die an den Positionen A und B erfolgten Farbumschläge wieder rückgängig gemacht werden.

Die gefundene Lösung hat den Vorteil, daß ohne Zuhilfenahme beweglicher Bauteile bei definierten Zeigerstellungen oder in einem kontinuierlichen Verlauf während des Überstreichens des Zifferblattes oder auch völlig unabhängig von einer bestimmten Zeigerstellung der visuelle Eindruck der Zeigerfahne veränderbar wird, wodurch über die jeweilige optische Anmutung der Zeigerfahne an den Betrachter der Anzeigevorrichtung eine der jeweiligen Anmutung zugeordnete Meldung abgesetzt werden kann.

## Patentansprüche

1. Anzeigevorrichtung mit einem Zeiger,
- wobei der Zeiger aus einer drehbaren Zeigerachse (2) und einer an der Zeigerachse (2) angeordneten Zeigerfahne (1) besteht,
- wobei die Zeigerfahne (1) infolge einer Drehung der Zeigerachse (2) über einem Zifferblatt (4) ausschwenkt,
**dadurch gekennzeichnet,**
- **dass** die Zeigerfahne (1) eine Mikrokapseln (22) enthaltene Beschichtung (12) aufweist,
- wobei in den Mikrokapseln (22) Pigmente (24) oder Mikrokörper (25, 26) eingelagert sind,
- wobei die Pigmente (24) oder Mikrokörper (25, 26) in ihrer Ausrichtung zum Betrachter durch ein magnetisches oder elektrisches Feld beeinflussbar sind und in Abhängigkeit ihrer Ausrichtung der Zeigerfahne (1) eine unterschiedliche optische Anmutung verleihen,
- **dass** Elektroden (11, 13, 14) zur Ausbildung eines elektrischen Feldes vorgesehen sind, wobei die Mikrokapseln (22) enthaltene Beschichtung (12) zwischen einer ersten Elektrode (11) und einer oder mehreren zweiten Elektrode(n) (13, 14) angeordnet ist,
- **dass** die mindestens eine zweite Elektrode (13 oder 14) auf der vom Betrachter abgewandten Seite des Zifferblattes (4) flächenhaft ausgebildet ist und durch ihre Kontur beim Überstrechen der Zeigerfahne (1) über dem Zifferblatt (4) eine kontinuierlich verlaufende Segmentierung der Zeigerfahne (1) hervorruft.

2. Anzeigevorrichtung mit einem Zeiger,
- wobei der Zeiger aus einer drehbaren Zeigerachse (2) und einer an der Zeigerachse (2) angeordneten Zeigerfahne (1) besteht,
- wobei die Zeigerfahne (1) infolge einer Drehung der Zeigerachse (2) über einem Zifferblatt (4) ausschwenkt,
**dadurch gekennzeichnet,**
- **dass** die Zeigerfahne (1) eine Mikrokapseln (22) enthaltene Beschichtung (12) aufweist,
- wobei in den Mikrokapseln (22) Pigmente (24) oder Mikrokörper (25, 26) eingelagert sind,
- wobei die Pigmente (24) oder Mikrokörper (25, 26) in ihrer Ausrichtung zum Betrachter durch ein magnetisches oder elektrisches Feld beeinflussbar sind und in Abhängigkeit ihrer Ausrichtung der Zeigerfahne (1) eine unterschiedliche optische Anmutung verleihen,
- **dass** eine Anordnung mit mindestens einem Elektromagneten (19) zur Ausbildung eines magnetischen Feldes zur Beeinflussung der in den Mikrokapseln (22) eingelagerten Pigmente (24) oder Mikrokörper (25) in der Beschichtung (12) der Zeigerfahne (1) vorgesehen ist.

3. Anzeigevorrichtung nach Anspruch 1 oder 2, **dadurch gekennzeichnet, dass** die Beschichtung (12) aus einem weitgehend transparentem Lack besteht, in dem die Mikrokapseln (22) frei beweglich emulgiert sind.

4. Anzeigevorrichtung nach Anspruch 3, **dadurch gekennzeichnet, dass** der Lack drucktechnisch auftragbar ist.

5. Anzeigevorrichtung nach Anspruch 1 oder 2, **dadurch gekennzeichnet, dass** die Beschichtung (12) aus einer transparenten Folie aus Kunststoff besteht.

6. Anzeigevorrichtung nach Anspruch 5, **dadurch gekennzeichnet, dass** die Folie auf der Zeigerfahne (1) aufgeklebt werden kann.

7. Anzeigevorrichtung nach einem der vorangegangenen Ansprüche, **dadurch gekennzeichnet, dass** die in den Mikrokapseln (22) eingelagerten Pigmente (24) oder Mikrokörper (25, 26) flächig und unterschiedlich eingefärbt sind.

8. Anzeigevorrichtung nach Anspruch 1, **dadurch gekennzeichnet, dass** die erste Elektrode (11) aus einer elektrisch leitfähigen Lackschicht, einem hauchdünnen Metallgeflecht oder einem Trägermaterial aus Kunststoff besteht, die jeweils einen hohen Transmissionsgrad aufweisen.

9. Anzeigevorrichtung nach Anspruch 2, **dadurch gekennzeichnet, dass** bei Verwendung von mehreren Elektromagneten (19) diese unterschiedliche Abstände zur Zeigerachse (2) aufweisen.

10. Anzeigevorrichtung nach einem der vorangegangen Ansprüche, **dadurch gekennzeichnet, dass** der Beschichtung (12) auf der Zeigerfahne (1) eine aus einem Lack oder einer Kleberfolie bestehende Farbschicht (21) unterlagert ist, deren Sicht für einen auf die Zeigerfahne (1) blickenden Betrachter je nach Ausrichtung und Intensität eines auf die Beschichtung (12) einwirkenden elektrischen oder magnetischen Feldes durch die Pigmente (24) oder Mikrokörper (25, 26) entweder freigegeben oder versperrt wird.

## Claims

1. Indicating device comprising a pointer,
- the pointer comprising a rotatable pointer spindle (2) and a pointer vane (1) arranged on the pointer spindle (2),
- the pointer vane (1) swinging out over a dial (4) on account of a rotation of the pointer spindle (2),
**characterized**
- **in that** the pointer vane (1) has a coating (12) containing microcapsules (22),
- pigments (24) or microbodies (25, 26) being incorporated in the microcapsules (22),
- the pigments (24) or microbodies (25, 26) being able to be influenced by a magnetic or electric field in terms of their orientation with respect to the observer and imparting a different optical appearance to the pointer vane (1) depending on their orientation,
- **in that** electrodes (11, 13, 14) for forming an electric field are provided, the coating (12) containing microcapsules (22) being arranged between a first electrode (11) and one or a plurality of second electrodes (13, 14),
- **in that** the at least one second electrode (13 or 14) is formed areally on that side of the dial (4) which is remote from the observer, and brings about a continuously running segmentation of the pointer vane (1) by virtue of its contour when the pointer vane (1) sweeps over the dial (4).

2. Indicating device comprising a pointer,
- the pointer comprising a rotatable pointer spindle (2) and a pointer vane (1) arranged on the pointer spindle (2),
- the pointer vane (1) swinging out over a dial (4) on account of a rotation of the pointer spindle (2),
**characterized**
- **in that** the pointer vane (1) has a coating (12) containing microcapsules (22),
- pigments (24) or microbodies (25, 26) being incorporated in the microcapsules (22),
- the pigments (24) or microbodies (25, 26) being able to be influenced by a magnetic or electric field in terms of their orientation with respect to the observer and imparting a different optical appearance to the pointer vane (1) depending on their orientation,
- **in that** provision is made of an arrangement having at least one electromagnet (19) for forming a magnetic field for influencing the pigments (24) or microbodies (25) incorporated in the microcapsules (22) in the coating (12) of the pointer vane (1).

3. Indicating device according to Claim 1 or 2, **characterized in that** the coating (12) is composed of a largely transparent lacquer in which the microcapsules (22) are emulsified in freely movable fashion.

4. Indicating device according to Claim 3, **characterized in that** the lacquer can be applied by printing technology.

5. Indicating device according to Claim 1 or 2, **characterized in that** the coating (12) is composed of a transparent film made of plastic.

6. Indicating device according to Claim 5, **characterized in that** the film can be adhesively bonded on the pointer vane (1).

7. Indicating device according to one of the preceding claims, **characterized in that** the pigments (24) or microbodies (25, 26) incorporated in the microcapsules (22) are sheetlike and differently coloured.

8. Indicating device according to Claim 1, **characterized in that** the first electrode (11) is composed of an electrically conductive lacquer layer, an extremely thin metal braiding or a carrier material made of plastic, which in each case have a high transmittance.

9. Indicating device according to Claim 2, **characterized in that**, when a plurality of electromagnets (19) are used, said electromagnets are at different distances from the pointer spindle (2).

10. Indicating device according to one of the preceding claims, **characterized in that** the coating (12) on the pointer vane (1) is underlaid by a colour layer (21) which is composed of a lacquer or an adhesive film and the view of which, for an observer looking at the pointer vane (1), is either enabled or blocked by the pigments (24) or microbodies (25, 26) depending on the orientation and intensity of an electric or magnetic field acting on the coating (12).

## Revendications

1. Appareil indicateur comportant une aiguille,
- où l'aiguille se compose d'un axe d'aiguille (2) rotatif et d'une palette d'aiguille (1) montée sur l'axe d'aiguille (2),
- où la palette de l'aiguille (1) dévie au-dessus d'un cadran (4) à la suite d'une rotation de l'axe de l'aiguille (2),
**caractérisé par le fait**
- **que** la palette de l'aiguille (1) porte un revêtement (12) renfermant des micro-capsules (22),
- des pigments (24) ou des corps microscopiques (25, 26) étant incorporés dans les micro-capsules (22),
- l'orientation par rapport à l'observateur des pigments (24) ou des corps microscopiques (25, 26) pouvant être influencée par un champ magnétique ou électrique et, en fonction de leur orientation, ils donnent une impression optique différente à la palette de l'aiguille (1),
- **qu**'il est prévu des électrodes (11, 13, 14) permettant de produire un champ électrique, le revêtement (12) comprenant les micro-capsules (22) étant placé entre une première électrode (11) et une ou plusieurs deuxièmes électrodes (13, 14),
- **que** la au moins une deuxième électrode (13 ou 14) est formée en nappe sur la face du cadran (4) opposée à l'observateur et produit, grâce à son contour, lors du balayage de la palette de l'aiguille (1) au-dessus du cadran (4), une segmentation continue de la palette de l'aiguille (1).

2. Appareil indicateur comportant une aiguille,
- où l'aiguille se compose d'un axe d'aiguille (2) rotatif et d'une palette d'aiguille (1) montée sur l'axe d'aiguille (2),
- où la palette de l'aiguille (1) dévie au-dessus d'un cadran (4) à la suite d'une rotation de l'axe de l'aiguille (2),
**caractérisé par le fait**
- **que** la palette de l'aiguille (1) porte un revêtement (12) renfermant des micro-capsules (22),
- des pigments (24) ou des corps microscopiques (25, 26) étant incorporés dans les micro-capsules (22),
- l'orientation par rapport à l'observateur des pigments (24) ou des corps microscopiques (25, 26) pouvant être influencée par un champ magnétique ou électrique et, en fonction de leur orientation, ils donnent une impression optique différente à la palette de l'aiguille (1),
- **qu**'il est prévu un système comportant au moins un électro-aimant (19) destiné à créer un champ magnétique permettant d'influencer les pigments (24) ou les corps microscopiques (25) incorporés dans les capsules (22) dans le revêtement (12) de la palette de l'aiguille (1).

3. Appareil indicateur selon la revendication 1 ou 2, **caractérisé par le fait que** le revêtement (12) est composé d'un vernis pratiquement transparent dans lequel les micro-capsules (22) sont émulsionnées et librement mobiles.

4. Appareil indicateur selon la revendication 3, **caractérisé par le fait que** le vernis est appliqué par impression.

5. Appareil indicateur selon la revendication 1 ou 2, **caractérisé par le fait que** le revêtement (12) est composé par une membrane transparente en matière plastique.

6. Appareil indicateur selon la revendication 5, **caractérisé pa**r **le fait que** la membrane peut être collée sur la palette de l'aiguille (1).

7. Appareil indicateur selon l'une des revendications précédentes, **caractérisé par le fait que** les pigments (24) ou les corps microscopiques (25, 26) incorporés dans les micro-capsules (22) sont en nappe et colorés d'une façon différente.

8. Appareil indicateur selon la revendication 1, **caractérisé par le fait que** la première électrode (11) se compose d'une couche de vernis conductive de l'électricité, d'une trame métallique extrêmement fine ou d'une matière support en matière plastique, qui ont chacune un pouvoir transmissif élevé.

9. Appareil indicateur selon la revendication 2, **caractérisé par le fait que,** si on utilise plusieurs électro-aimants (19), ceux-ci sont à une distance différente de l'axe de l'aiguille (2).

10. Appareil indicateur selon l'une des revendications précédentes, **caractérisé par le fait qu**'une couche colorée (21) composée d'un vernis ou d'une membrane collée se trouve sous le revêtement (12) sur la palette de l'aiguille (1) et que les pigments (24) ou les corps microscopiques (25, 26) la rendent, en fonction de l'orientation et de l'intensité d'un champ électrique ou magnétique agissant sur le revêtement (12), soit visible soit invisible pour un observateur regardant la palette de l'aiguille (1).
